# EUROPEAN PATENT APPLICATION

(11) **EP 4 250 546 A1**
(43) Date of publication of application: **27.09.2023**
(21) Application number: 22163244.1
(22) Date of filing: 21.03.2022
(51) Int. Cl.: H02M 3/07, H02M 1/42, H02M 3/158

(54) **DC-DC CONVERTER AND METHOD OF CONTROLLING IT**

(71) Applicant: ABB SCHWEIZ AG, 5400 Baden (CH)
(72) Inventor: ABDELHAKIM, Ahmed, 723 39 Västerås (SE); CANALES, Francisco, 5405 Baden-Dättwil (CH)
(74) Representative: Kransell & Wennborg KB

(57) **Abstract**

A converter (12A) converting between a first voltage (Vi) and a second voltage (V2) comprises a first, second, third and fourth connection terminal (Ti, T2, T3, T4), a string of half-bridges, each comprising a capacitor (C1, C2) in parallel with an upper and a lower semiconductor (SCiU, SCiL, SC2U, SC2L), and a group of inductors (Li, L2), each connected to a junction between the upper and lower semiconductor of a corresponding half-bridge. The first connection terminal (T1) being provided at a junction between the lower semiconductor (SCiL) and capacitor (C1) of a first half-bridge (HBi), the second connection terminal (T2) being connected to a first inductor (Li) associated with the first half-bridge (HBi), the third connection terminal (T3) being connected to the first (T1) and the fourth connection terminal (T4) being provided at a junction between the capacitor (C2) and upper semiconductor (SC2U; SC₃U) of a last half-bridge (HB2), wherein the lower semiconductor (SCiL) of the first half-bridge is a first switch (SWi) and each inductor (L2) associated with a half-bridge (HB2) after the first is connected to a corresponding floating capacitor (CF1) and inductively coupled to the first inductor (Li).

## Description

### FIELD OF INVENTION

The present application is directed to a converting arrangement comprising a converter for converting between a first voltage and a second voltage as well as to a method of controlling a converter for converting between a first dc voltage and a second dc voltage.

### BACKGROUND OF INVENTION

Boosting dc-dc converters are of interest to use in a variety of situations, such as for interconnecting a fuel cell with a battery.

One type of dc-dc converter that uses cascaded boosting stages is described in "Switched Capacitor Cascaded Bidirectional DC-DC Converter Suitable for Energy Storage System", by Mei et al. in 2021 IEEE 12th Energy Conversion Congress & Exposition - Asia (ECCE-Asia).

The integration of fuel cells is seen to be challenging due to the wide variation of their output voltage, which is quite high during their start-up. A typical fuel cell voltage can be somewhere between 300V and 700V for a typical 100-200kW module, where the voltage during the start-up period is around 700V, and it drops to roughly 500V once the minimal load is withdrawn. Hence, it is quite challenging to connect a battery on the secondary side of the fuel cell converter without a battery converter since the fuel cell converter will be directly exposed to the battery voltage variation which is function of the battery state of charge (SoC). Therefore, the lowest battery voltage under lowest SoC value should be larger than the fuel cell starting voltage, which results in higher voltage gain requirements when the fuel cell operates at higher power and the battery is fully charged. Otherwise, a battery converter is required, and a constant dc-bus with a dc-bus voltage slightly higher than the fuel cell starting voltage will be established, where the battery maximum voltage shall be smaller than the dc-bus voltage.

There is thus in many cases a need for a flexible dc-dc converter that is able to operate on input voltages ranging between 300 V and 700 V and provide an output that is able to handle voltage variations.

### SUMMARY OF INVENTION

An object of the present disclosure is therefore to provide dc-dc conversion with flexible high-voltage gain combined with handling input voltage variations.

This object is according to a first aspect achieved through a converting arrangement comprising a converter for converting between a first voltage and a second voltage, the converter comprising:
a first and a second connection terminal between which the first voltage is to appear,
a third and a fourth connection terminal between which the second voltage is to appear,
a string of cascaded half-bridge blocks comprising a first half-bridge block and a second half-bridge block, each half-bridge block comprising a capacitor in parallel with a semiconductor branch comprising an upper and a lower semiconducting element,
a group of inductors, each inductor being connected to a junction between the upper and lower semiconducting element of a corresponding half-bridge block,
where the first connection terminal is provided at a junction between the lower semiconducting element and the capacitor of the first half-bridge block, the second connection terminal is connected to a first inductor of the group associated with the first half-bridge block, the third connection terminal is connected to the first connection terminal and the fourth connection terminal is provided at a junction between the capacitor and the upper semiconducting element of the last half-bridge block in the string,
wherein the lower semiconducting element of the first half-bridge block is a first switch and each inductor associated with a half-bridge block after the first half-bridge block is connected to a corresponding floating capacitor and inductively coupled to the first inductor.

The first and second connection terminals may be connection terminals on a first direct current, dc, side of the converter, while the third and fourth connection terminals may be connection terminals on a second direct current, dc side, of the converter and the first and second voltages may be dc voltages.

The inductor of each of the half-bridge blocks following after the first half-bridge block may be inductively coupled to the first inductor with a turns ratio of n:1, where n is equal to or higher than one.

The first and third connection terminals may have a first electric potential and each inductor associated with a half-bridge block after the first half-bridge block in the string may be connected to the first electric potential via the corresponding floating capacitors. It is additionally possible that the second connection terminal has a second electric potential and the fourth connection terminal has a third electric potential, where the third electric potential is higher than the second electric potential and the second electric potential is higher than the first electric potential.

The first switch may additionally be configured to be turned on and off with a duty cycle being set for defining a gain of the converter.

The upper semiconducting element of the first half-bridge block and the semiconducting elements of each half-bridge block after the first half-bridge block in the string may be unidirectional conducting elements, i.e. semiconducting elements having a single direction of conductivity. The direction of conductivity of the unidirectional conducting elements may more particularly be towards the fourth connection terminal. The upper semiconducting element of the first half-bridge block and the semiconducting elements of the half-bridge blocks after the first half-bridge block may additionally be passive semiconductive elements and with advantage diodes.

Alternatively, the upper semiconducting element of the first half-bridge block in the string and the semiconducting elements of the half-bridge blocks after the first half-bridge block in the string may be switches. In this case the lower semiconducting elements of the half-bridge blocks after the first half-bridge block in the string may be on when the first switch is on and the upper semiconducting elements of the half-bridge blocks may be on when the first switch is off. The switches may additionally be operated to control the phase-shift between the voltages across the coupled inductors.

The converting arrangement may additionally comprise a control unit configured to control the operation of the switches of the converter.

The converting arrangement may also comprise a fuel cell connected to the first and second connection terminals as well as an energy storage connected between the third and fourth connection terminals.

A second aspect is directed towards a method of operating the converter of the first aspect, where each inductor of each half-bridge block after the first half-bridge block is inductively coupled to the first inductor with a turns ratio so that a voltage of the first inductor, adjusted with the turns ratio, is applied to said each inductor of each of the half-bridge blocks following after the first half-bridge block, the method comprising:
applying the first voltage across the first inductor based on a first switch position of the first switch for charging the first inductor,
charging, for each half-bridge block after the first half-bridge block in the string, the connected floating capacitor using the voltage across the corresponding inductor and the voltage across the capacitor of each half-bridge block preceding the half-bridge block in question,
applying a combination of the first voltage and the voltage of the first inductor across the capacitor of the first half-bridge block based on a second switch position of the first switch for charging the capacitor of the first half-bridge block to the combination of the first voltage and the voltage of the first inductor, and
applying, for each half-bridge block after the first half-bridge block in the string, a combination of the voltages of the corresponding floating capacitor and inductor across a circuit comprising the capacitor of the respective half-bridge block connected in series with the capacitors of preceding half-bridge blocks in the string for charging the capacitors of the circuit and obtaining the second voltage as the sum of the voltages of the capacitors of the half-bridge blocks.

The charging, for each half-bridge block after the first half-bridge block in the string, the connected floating capacitor using the voltage across the corresponding inductor and the voltage across the capacitor of each half-bridge block preceding the half-bridge block in question, may be based on the lower semi-conducing element of the respective half-bridge block conducting and the applying, for each half-bridge block after the first half-bridge block in the string, a combination of the voltages of the corresponding floating capacitor and inductor across a circuit comprising the capacitor of the respective half-bridge block connected in series with the capacitors of preceding half-bridge blocks in the string may be based on the upper semi-conducting element of the respective half-bridge block conducting.

A combination of voltages may be a sum of voltages.

When the upper semiconducting element of the first half-bridge block and the semiconducting elements of the half-bridge blocks after the first half-bridge block in the string are diodes, the charging of floating capacitors may also be based on the first switch position of the first switch and the applying of a combination of voltages of a floating capacitor and an inductor across a circuit comprising capacitors of half-bridge blocks may also be based on the second switch position of the first switch. It is furthermore possible that also the charging of a floating capacitor being made for a half-bridge block after the first half-bridge block in the string is based on the first switch position of the first switch and that the applying, for each half-bridge block after the first half-bridge block in the string, the combination of voltages of the corresponding floating capacitor and inductor across the circuit comprising capacitors of half-bridge block is based on the second switch position of the first switch.

When the upper semiconducting element of the first half-bridge block and the semiconducting elements of the half-bridge blocks after the first half-bridge block in the string are switches, the charging being made for a half-bridge block after the first half-bridge block in the string may be based on a first switch position of the lower semiconducting element of the half-bridge block in question, the applying of the combination of the first voltage and the voltage of the first inductor across the capacitor of the first half-bridge block may also be based on a first switch position of the upper semiconducting element of the first half-bridge block and the applying, for a half-bridge block after the first half-bridge block in the string, the combination of voltages of the corresponding floating capacitor and inductor across the circuit comprising the series-connected capacitors of the respective half-bridge block and preceding half-bridge blocks may be based on a first switch position of the upper semiconducting element of the half-bridge block.

When the upper semiconducting element of the first half-bridge block and the semiconducting elements of the half-bridge blocks after the first half-bridge block in the string are switches, the applying of the combination of first voltage and the voltage of the first inductor across the capacitor of the first half-bridge block may also be based on the first switch position of the upper semiconducting element of the first half-bridge block. The applying, for a half-bridge block after the first half-bridge block in the string, of the combination of voltages of the corresponding floating capacitor and inductor across the circuit comprising series-connected capacitors of the respective half-bridge block and preceding half-bridge blocks in the string may in this case be based also on the first switch position of the upper semiconducting element of the half-bridge block in question.

The method may further comprise controlling a phase shift between the voltages across the coupled inductors.

### BRIEF DESCRIPTION OF DRAWINGS

Embodiments of the present disclosure will be presented in the sense of examples and their advantages are explained in greater detail below, with reference to the accompanying drawings, where:
Fig. 1 shows a first variation of a converting arrangement comprising a converter for converting between a first dc voltage and a second dc voltage and including a first switch;
Fig. 2 shows the operation of the first variation of the converting arrangement when the first switch is closed;
Fig. 3 shows the operation of the first variation of the converting arrangement when the first switch is open;
Fig. 4 shows a second variation of the converting arrangement;
Fig. 5 shows a third variation of the converting arrangement; and
Fig. 6 shows a flow chart of a number of steps in a method of controlling the converter for converting between the first dc voltage and the second dc voltage.

### DETAILED DESCRIPTION OF EMBODIMENTS

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

The present disclosure provides a converter arrangement which intends to provide a conversion between two voltages, which conversion provides a flexible high voltage-gain while handling input voltage variations.

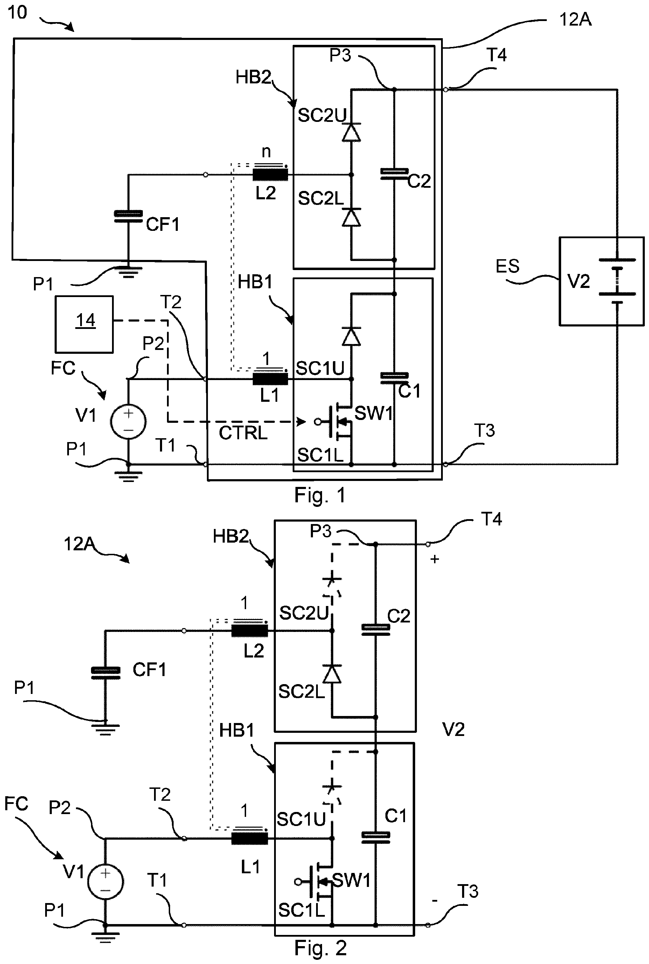

Fig. 1 shows a converting arrangement 10 comprising a converter 12A for converting between a first voltage V1 and a second voltage V2. For this reason, the converter 12A comprises a first and a second connection terminal T1, T2 between which the first voltage V1 is to appear as well as a third and a fourth connection terminal T3, T4 between which the second voltage V2 is to appear. The first and second connection terminals T1 and T2 are provided on a first direct current, dc, side of the converter 12A, while the third and fourth connection terminals T3 and T4 are provided on a second dc side of the converter 12A. Thereby the first and second voltages V1 and V2 are with advantage dc voltages. The converter 12A also comprises a string of cascaded half-bridge blocks comprising a first half-bridge block HB1 and a second half-bridge block HB2, where each half-bridge block HB1, HB2 comprises a capacitor C1, C2 in parallel with a semiconductor branch comprising an upper and a lower semiconducting element. In the present example the first half-bridge block HB1 is the first half-bridge block in the string and the second half-bridge block HB2 is the last half-bridge block in the string. The first half-bridge block HB1 comprises a first upper semiconducting element SC1U and a first lower semiconducting element SC1L. In a similar manner the second half-bridge block HB2 comprises a second upper semiconducting element SC2U and a second lower semiconducting element SC2L. The lower semiconducting element of a half-bridge block connects to the first connection terminal T1, while the upper semiconducting element of a half-bridge block connects to the fourth connection terminal T4. Moreover, the first lower semiconducting element SC1L of the first half-bridge block HB1 is a first switch SWi, here realized as a transistor and in this case as a Metal-Oxide-Semiconductor Field-Effect-Transistor (MOSFET). It should here be realized that it is possible with also other types of switch realisations such as through the use of a Junction-Gate Field-Effect-Transistor (JFET) and/or Integrated-Gate Bipolar Transistor (IGBT) with anti-parallel diode. In the first embodiment the rest of the semiconducting elements are realized as unidirectional conducting elements, where the direction of conductivity is towards the fourth connection terminal T4. In the present example the unidirectional conducting elements are passive elements in the form of diodes.

The converter 12A also comprises a group of inductors, where each inductor in the group is connected to a junction between the upper and lower semiconducting element of a corresponding half-bridge block. It can be seen that a first end of a first inductor L1 is connected to the junction between the first upper semiconducting element SC1U and the first lower semiconducting element SC1L of the first half-bridge block HB1 and that a first end of a second inductor L2 is connected to the junction between the second upper semiconducting element SC2U and the second lower semiconducting element SC2L of the second half-bridge block HB2.

Moreover, the first connection terminal T1 of the converter 12A is provided at a junction between the first lower semiconducting element SC1L and the capacitor C1 of the first half-bridge block HB1, the second connection terminal T2 is connected to the first inductor L1 of the group associated with the first half-bridge block HB1 and the third connection terminal T3 is connected to the first connection terminal T1. In fig. 1, the third connection terminal T3 is also provided at the junction between the capacitor C1 and the first lower semiconducting element SC1L of the first half-bridge block HB1. Finally, the fourth connection terminal T4 is provided at a junction between the capacitor C2 and the upper semiconducting element SC2U of the last half-bridge block HB2 in the string of cascaded half-bridge blocks. In the example of fig.1 this means that the second connection terminal T2 is connected to the second end of the first inductor L1 and that the fourth connection terminal T4 is provided at a junction between the capacitor C2 and the second upper semiconducting element SC2U of the second half-bridge block HB2.

Furthermore, the inductor of each of the half-bridge blocks following after the first half-bridge block HB1 is connected to a corresponding floating capacitor and inductively coupled to the first inductor L1. It can thus be seen that the second inductor L2 associated with the second half-bridge block HB2 is inductively coupled to the first inductor L1. This coupling may additionally be a coupling with a turns ratio of n:1, where n is equal to or higher than one. The coupling may additionally be such that a current entering the first end of the first inductor L1 will cause a positive voltage at the first end of the second inductor L2. This is indicated through the first ends of the first and the second inductors L1 and L2 each being marked with a dot.

The first and third connection terminals T1, T3 also have a first electric potential Pi, which in the example of fig. 1 is ground potential, while the second connection terminal T2 has a second electric potential T2 that is higher than the first electric potential P1 and the fourth connection terminal T4 has a third electric potential P3 that is higher than the second electric potential P2. Moreover, the inductors associated with each of the half-bridge blocks following after the first half-bridge block HB1 are connected to the first electric potential P1 via the corresponding floating capacitor. It can thereby be seen that the second inductor L2 associated with the second half-bridge block HB2 is connected to the first electric potential P1 via a first floating capacitor CF1. It can more particularly be seen that the second end of the second inductor L2 is connected to the first electric potential P1 via the first floating capacitor CF1.

The converting arrangement 10 also comprises a fuel cell FC and an energy storage ES, where the fuel cell FC is connected between the first and the second connection terminals T1, T2 of the converter 12A and provides the first voltage V1 as an input voltage to the converter 12A, while the energy storage ES, which may be realized as one or more batteries, is connected between the third and fourth connection terminals T3, T4 of the converter 12A and receives or has the second voltage V2.

Finally, there is a control unit 14 that controls the first switch SW1 with a control signal CTRL. The control signal CTRL has a high level used to give the first switch SW1 a first switch position in which the first switch SW1 is closed (current flowing through the switch). The control signal CTRL also has a low level used to give the first switch SW1 a second switch position in which the first switch SW1 is open (no current flowing through the switch). The control signal CTRL may have a duty cycle with a value used to set a desired voltage gain of the converter 12A. The control unit 14 may be realized through a processor acting on computer instructions implementing the functionality of the control unit 14.

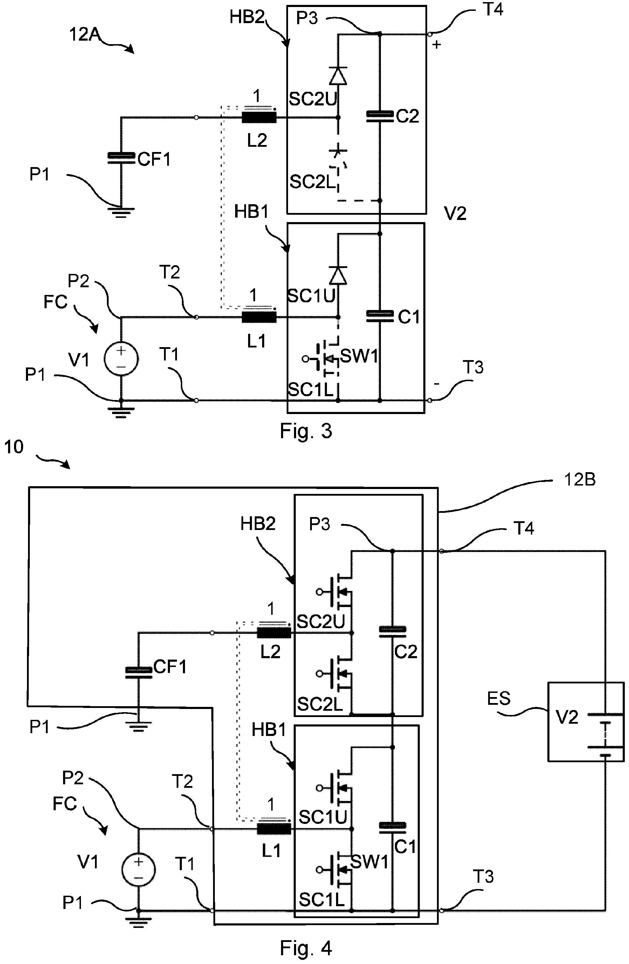

The operation of the first embodiment will now be described with reference being made to fig. 2 and 3 which show the operation when the first switch SW1 is closed and open, respectively. The open position of the switch is indicated through the switch being dashed. In the drawings diodes are also forward- and reverse-biased. Reverse-biasing is also indicated through dashing. For simplicity n is here also equal to one.

Every time that the first switch SW1 is closed, as in Fig. 2, the first inductor L1 will be charged using the first voltage Vi. The level to which the first inductor L1 is charged depends on the duty cycle. As an example, it will be charged to a voltage that is equal to the first voltage V1 for a duty cycle of 50%, As the second inductor L2 is coupled to the first inductor L1, it will experience the same voltage, which is thus V1 for a duty cycle of 50%. The operation also results in forward biasing the second lower semiconducting element SC2L of the second half-bridge block HB2. It can also be seen that the upper semiconducting element SC1U of the first half-bridge block HB1 is reverse-biased due to the voltage across the capacitor C1 of the first half-bridge block HB1, which, as can be seen later, may be 2^{∗}V1 for the previously mentioned 50% duty cycle of SW1. It is worth noting that the first floating capacitor CF1 connected to the second half-bridge block HB2 is charged in this case. Due to the coupling to the first inductor L1, the second inductor L2 will have the same voltage across it as the first inductor L1, which in the example is V1. It can therefore be seen that the first floating capacitor CF1 will be charged to a voltage of 3^{∗}V1 if the capacitor C1 has a voltage of 2^{∗}V1 due to the operation of the first switch SW1 with a 50% duty cycle. As the second lower semiconducting element SC2L of the second half-bridge block HB2 is forward-biased, the second upper semiconducting element SC2U is also reverse-biased if the capacitor C2 of the second half- bridge block HB2 has any charge.

Then, when the first switch SW1 is opened, the first upper semiconducting element SC1U of the first half-bridge block HB1 is forward biased. Thereby a circuit comprising the fuel cell FC in series with the first inductor L1 is connected in parallel with the capacitor C1 of the first half-bridge block HB1, as illustrated in Fig. 3. The voltage across the first inductor L1 is also reversed compared to the closed state of the first switch SW1 as is the voltage across the second inductor L2 because of the coupling. Thereby the capacitor C1 of the first half-bridge block HB1 is charged. As the first inductor L1 was charged to V1 for a 50% duty cycle of SWi, it can be seen that the capacitor C1 will be charged to 2^{∗}V1 by the combination of fuel cell FC and first inductor L1. It can also be seen that the second lower semiconducting element SC2L of the second half-bridge block HB2 is reverse-biased due to the sum of the voltage of the first floating capacitor CF1 and the voltage of the second inductor L2 being higher than 2^{∗}V1 for a 50% duty cycle of SWi, where, as was mentioned above, the voltage of the second inductor L2 in this case is V1 due to the coupling to the first inductor L1. In addition to that, the second upper semiconducting element (diode) SC2U of the second half-bridge block HB2 is forward biased, and the capacitor C2 of this second half-bridge block as well as the capacitor C1 of the first half-bridge block HB1 are charged by the voltage of the first floating capacitor CF1 and the voltage of the second inductor L2. It can more particularly be seen that a voltage of 3^{∗}V1 will be provided as a contribution from the first floating capacitor CF1 to the second voltage V2 and a voltage of V1 will be provided as a contribution from the second inductor L2 to the second voltage V2 between the third and fourth connection terminals T3, T4, which contributions are applied as a total voltage of 4^{∗}V1 to the energy storage ES. The second voltage V2 will thus be 4^{∗}V1 when there is a 50% duty cycle of SW1 and thereby the conversion from the first voltage V1 to the second voltage V2 is a boosting. In the example given above a duty cycle of 50% was used in order to provide a pedagogical example of the operation. As was mentioned earlier, the duty cycle may be varied and consequently also the previously mentioned relations to the first voltage V1 may vary.

The above-described converter structure has proved to be beneficial for interconnecting fuel cells with energy storages such as batteries in that the converter is capable of adapting to voltage variations of the fuel cell at start up. There is also no need for any separate converter for the energy storage. If a duty cycle of 50% is used it is also possible to cancel fuel cell current ripple under interleaved operation. However, the converter is unidirectional in that it only allows transmission of power from the first and second connection terminals T1, T2 to the third and fourth connection terminals T3, T4.

Fig. 4 shows a second embodiment of the converting arrangement 10 comprising a bidirectional converter 12B. The difference between the first and the second embodiments lies in the realization of the semiconducting elements of the converter 12B. The first lower semiconducting element SC1L of the first half-bridge block HB1 is also in this case a first switch SW1. However, in this second embodiment also the rest of the semiconducting elements SC1U, SC2L, SC2U are realized as switches.

The first switch SW1 is operated in the same way as described above, while the rest of the switches may be controlled in the way suggested by the forward-biased and reverse-biased diodes in fig. 2 and 3, where a reverse-biased diode corresponds to an opened switch and a forward-biased diode to a closed switch. The first and second lower semiconducting elements SC1L, SC2L of the first and second half-bridge blocks HB1, HB2 may be turned on and off simultaneously, and the first and second upper semiconducting elements SC1U, SC2U of the first and second half-bridge blocks HB1, HB2 may be turned on and off simultaneously, where the first and second lower semiconducting elements SC1L, SC2L are turned off when the first and second upper semiconducting elements SC1U, SC2U are turned on, and vice versa.

The control may also be adjusted so that the operation of the switches of the one of the half-bridge blocks is delayed in relation to the operation of the switches of the other half-bridge block. This may be done in order to control the phase shift between the voltages experienced by the coupled inductors. This may be advantageous if soft switching is desired along with controlling the voltage gain of the whole converter.

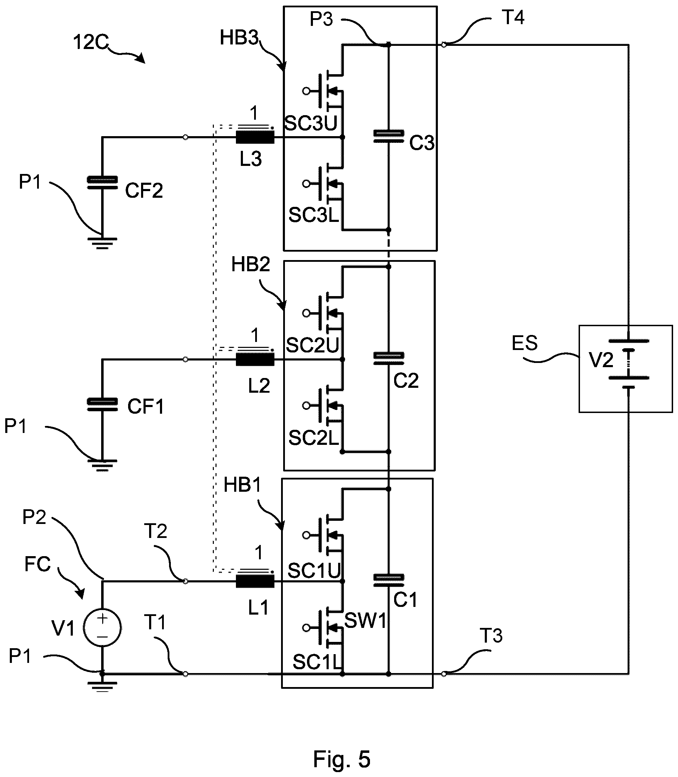

It should also be realized that it is possible to include more half-bridge blocks. One example of this is shown in fig. 5, in which there is a converter 12C with three half-bridge blocks and all semiconducting elements realized as switches. There is in this case a third half-bridge block HB3 connected in cascade with the first and the second half-bridge blocks HB1, HB2. There is thus a third half-bridge block HB3 comprising a capacitor C3 in parallel with a semiconductor branch comprising a third upper and a third lower semiconducting element SC3U, SC3L. In this case the group of inductors also comprise a third inductor L3 that is coupled to the first inductor L1, where a first end of the third inductor L3 is connected to a junction between the third upper and third lower semiconducting element SC3U, SC3L of the third half-bridge block HB3, and a second end of the third inductor L3 is connected to the first electric potential P1 via a corresponding second floating capacitor CF2. The coupling may in this case be realized in the same way as between the first and the second inductors L1 and L2. In this case the third half-bridge block HB3 is the last half-bridge block in the string. The fourth connection terminal T4 is thereby provided at a junction between the capacitor C3 and the third upper semiconducting element SC3U of the third half-bridge block HB3. It should here be realized that it is possible to vary the converter 12C so that only the first lower semiconducting element of the first half-bridge block is a switch, with the rest of the semiconducting elements being diodes.

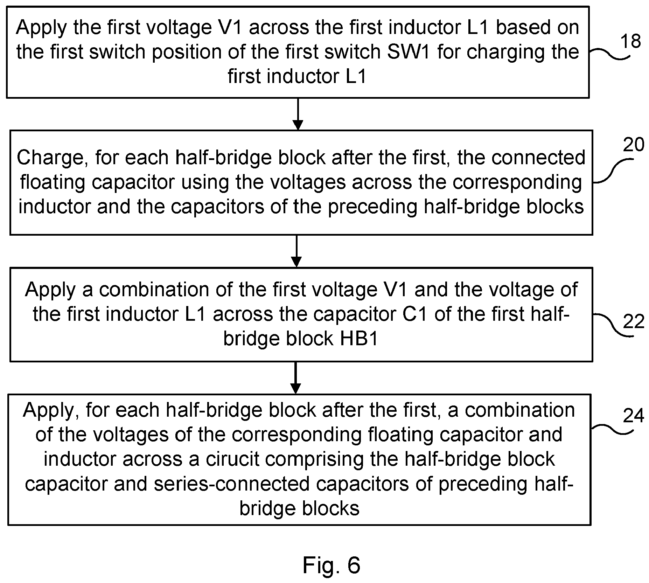

The operation of the converter may generally be as outlined in fig. 6, which shows a flow chart of a number of method steps in a method of operating the converter. Due to the inductive coupling between the first inductor L1 of the first half-bridge block and the inductors of the other half-bridge-blocks, any voltage of the first inductor L1 is also obtained, modified according to the turns ratio, at each of the coupled inductors.

The method comprises applying the first voltage V1 across the first inductor L1 based on the first switch position of the first switch SW1 for charging the first inductor L1, step 18. The applying of the first voltage V1 is thus based on the first switch SW1 being closed. Thereby a voltage to which the first inductor L1 is charged is also V1 at the 50% duty cycle. This is followed by charging, for each half-bridge block after the first half-bridge block in the string, the connected floating capacitor using the voltage across the corresponding inductor and the voltage across the capacitor of each half-bridge block before the half-bridge block in question, step 20, i.e. of each preceding half-bridge block in the string. In the first and second converter realizations shown in fig. 1, 2, 3 and 4 there is only one half-bridge block after the first half-bridge block HB1 in the string, namely the second half-bridge block HB2. Therefore, the first floating capacitor CF1 connected to the second half-bridge block HB2 will be charged by the voltage of the second inductor L2 and the voltage of the capacitor C1 of the first half-bridge block HB1. In the third converter realization shown in fig. 5, the second and the third half-bridge blocks HB2, HB3 are both provided after the first half-bridge block HB1 in the string. In this case the first floating capacitor CF1 connected to the second half-bridge block HB2 is charged in the same way as described above, while the second floating capacitor CF2 connected to the third half-bridge block HB3 is charged by the voltage of the third inductor L3 and the voltages of the capacitors C1, C2 of the first and second half-bridge blocks HB1, HB2, since these two half-bridge blocks precede the third half-bridge block HB3 in the string.

Then follows applying a combination of the first voltage V1 and the voltage of the first inductor L1 across the capacitor C1 of the first half-bridge block HB1 based on the second switch position of the first switch SWi, step 22, i.e. based on the first switch SW1 being closed, where the applying of a combination of the first voltage V1 and voltage of the first inductor L1 may comprise applying the sum of these voltages across the capacitor C1 for charging it to the combination of the first voltage V1 and the voltage of the first inductor L1.

Finally, there is an applying, for each half-bridge block after the first half-bridge block in the string, a combination of the voltages of the corresponding floating capacitor and inductor across a circuit comprising the capacitor of the respective half-bridge block connected in series with capacitors of preceding half-bridge blocks in the string, step 24 based on the upper semiconducting element of the half-bridge block conducting for charging the capacitors of the circuit. This can be seen as connecting a first circuit in parallel with a second circuit, where the first circuit comprises the floating capacitor and the inductor associated with the half-bridge block and the second circuit comprises the capacitor of the half-bridge block and the capacitors of the preceding half-bridge blocks, with these capacitors being connected in series. Thereby the second voltage V2 is obtained as the sum of the voltages of the capacitors of the half-bridge blocks. This means that in the first and second converter realizations the voltage of the first floating capacitor CF1 and the voltage of the second inductor L2 connected to the second half-bridge block HB2 will be combined and applied across a circuit comprising the capacitor C2 of the second half-bridge block HB2 and the capacitor C1 of the first half-bridge block HB1 with these capacitors C1 and C2 being connected in series and where this application of combined voltages is based on the second upper semiconducting element SC2U conducting. In the third converter realization additionally the voltages of the second floating capacitor CF2 and the third inductor L3 connected to the third half-bridge block HB3 are combined and applied across a circuit comprising the capacitor C3 of the third half-bridge block HB3 and the capacitors C1, C2 of the first and second half-bridge blocks HB1, HB2, where these capacitors C1, C2 and C3 are connected in series and where the application of combined voltages is based on the third upper semiconducting element SC3U conducting. It is here possible that each combination is a sum of a voltage of a floating capacitor and a voltage of an inductor that for a corresponding half-bridge block is applied across a circuit formed as the series-connection of the capacitors of this and previous half-bridge blocks.

It can be noted that in the first converter realization also the charging of a floating capacitor is based on the first switch position of the first switch SWi, and the applying, for each half-bridge block HB2 after the first half-bridge block HB1 in the string, the combination of voltages of the corresponding floating capacitor CF1 and inductor L2 across a circuit comprising the series-connected capacitors C1 and C2 of the half-bridge blocks is based on the second switch position of the first switch SW1.

It can also be noted that in the second and third converter realizations when all semiconducting elements are switches, the charging of a floating capacitor is based on the first switch position of the lower semiconducting element of the half-bridge block in question. The charging of the first floating capacitor CF1 is thus based on the second lower semiconducting element SC2L of the second half-bridge block HB2 being closed. The same is true for the third half-bridge block HB3 if present. The charging of the second floating capacitor CF2 is thus based on the third lower semiconducting element SCL3 of the third half-bridge block HB3 being closed.

The applying of the first voltage V1 and the voltage of the first inductor L1 across the capacitor C1 of the first half-bridge block HB1 may in this case be based also on the first switch position of the first upper semiconducting element SC1U of the first half-bridge block HB1, i.e. based on the first upper semiconducting element SC1U of the first half-bridge block HB1 being closed. The applying, for a half-bridge block after the first half-bridge block HB1 in the string, of the combination of voltages of the corresponding floating capacitor and inductor across the circuit comprising the series-connected capacitors of the half-bridge block in question and the preceding half-bridge blocks in the string may in this case be based on the first switch position of the upper semiconducting element of the half-bridge block in question, i.e. based on this semiconducting element being closed. This means that in the second and third converter realizations, the combination of the voltages of the first floating capacitor CF1 and the second inductor L2 will be applied across a circuit comprising the series-connected capacitors C1, C2 of the first and second half-bridge blocks HB1, HB2 based on the first switch position of the second upper semiconducting element SC2U, where additionally in the third converter realization the combination of the voltages of the second floating capacitor CF2 and the third inductor L3 connected to the third half-bridge block HB3 will be applied across the circuit formed by the series-connected capacitors C1, C2, C3 based on the first switch position of the third upper semiconducting element SC3U.

Furthermore, the operation of the upper and lower semiconducting elements may be complementary. The applying of the first voltage V1 across the first inductor L1 may thereby additionally be based on the second switch position of the first upper semiconducting element SC1U of the first half-bridge block HB1, and the charging of a floating capacitor being made for a half-bridge block after the first half-bridge block HB1 may additionally be based on the second switch position of the upper semiconducting element of the half-bridge block. The charging of the first floating capacitor CF1 being made for the second half-bridge block HB2 may thus be based on the second upper semiconducting element SC2U of the second half-bridge block HB2 being open. The same is true for the third half-bridge block HB3 if being present. The charging of the second floating capacitor CF2 being made for the third half-bridge block HB3 is thus based on the third upper semiconducting element SCL3U of the third half-bridge block HB3 being open.

The applying, for a half-bridge block located after the first half-bridge block HB1 in the string, of the voltages of the corresponding floating capacitor and inductor across the capacitor of the half-bridge block may in this case be based also on the second switch position of the lower semiconducting element of the half-bridge block, i.e. based on the lower semiconducting element being open. This means that in the second and third converter realizations, the combination of the voltages of the first floating capacitor CF1 and the second inductor L2 will be applied across a circuit comprising the series-connected capacitors C1, C2 of the first and second half-bridge blocks HB1, HB2 based on the second switch position of the second lower semiconducting element SC2L, where additionally in the third converter realization the combination of the voltages of the second floating capacitor CF2 and the third inductor L3 connected to the third half-bridge block HB3 will be applied across a circuit comprising the series-connected capacitors C1, C2, C3 based on the second position of the third lower semiconducting element SC3L.

The controlling may further comprise controlling a phase shift between the voltages across the coupled inductors. This may be done through adjusting the operation of the half-bridge blocks in relation to each other. The operation of the switches of one of the half-bridge blocks may as an example be delayed in relation to the operation of the switches of another half-bridge block. This may be done in order to control the phase shift between the voltages experienced by the coupled inductors.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. A converting arrangement (10) comprising a converter (12A; 12B; 12C) for converting between a first voltage (Vi) and a second voltage (V2), the converter comprising:
a first and a second connection terminal (T1, T2) between which the first voltage (Vi) is to appear,
a third and a fourth connection terminal (T3, T4) between which the second voltage (V2) is to appear,
a string of cascaded half-bridge blocks comprising a first half-bridge block (HBi) and a second half-bridge block (HB2), each half-bridge block (HB1, HB2; HB1, HB2, HB3) comprising a capacitor (C1, C2; C1, C2, C3) in parallel with a semiconductor branch comprising an upper and a lower semiconducting element (SC1U, SC1L, SC2U, SC2L; SC1U, SC1L, SC2U, SC2L, SC3U, SC3L),
a group of inductors (L1, L2; L1, L2, L3), each inductor being connected to a junction between the upper and lower semiconducting elements of a corresponding half-bridge block,
where the first connection terminal (T1) is provided at a junction between the lower semiconducting element (SC1L) and the capacitor (C1) of the first half-bridge block (HBi), the second connection terminal (T2) is connected to a first inductor (Li) of the group associated with the first half-bridge block (HBi), the third connection terminal (T3) is connected to the first connection terminal (T1) and the fourth connection terminal (T4) is provided at a junction between the capacitor (C2; C3) and the upper semiconducting element (SC2U; SC3U) of the last half-bridge block (HB2; HB3) in the string,
wherein the lower semiconducting element (SC1L) of the first half-bridge block (HBi) is a first switch (SWi) and each inductor (L2; L2; L3) associated with a half-bridge block (HB2; HB2, HB3) after the first half-bridge block (HBi) is connected to a corresponding floating capacitor (CF1; CF1, CF2) and inductively coupled to the first inductor (Li).

2. The converting arrangement (10) according to claim 1, wherein the first and third connection terminals (T1, T3) have a first electric potential (P1) and each inductor (L2; L2, L3) associated with a half-bridge block (HB2; HB2, HB3) after the first half-bridge block (HBi) is connected to the first electric potential (P1) via the corresponding floating capacitors (CF1; CF1, CF2).

3. The converting arrangement (10) according to claim 2, wherein the second connection terminal (T2) has a second electric potential (P2) and the fourth connection terminal (T4) has a third electric potential (P3), where the third electric potential (P3) is higher than the second electric potential (P2) and the second electric potential (P2) is higher than the first electric potential (P1).

4. The converting arrangement (10) according to any previous claim, wherein the upper semiconducting element (SC1U) of the first half-bridge block (HBi) and the semiconducting elements (SC2L, SC2U; SC2L, SC2U, SC3K, SC3U) of each half-bridge block (HB2; HB2, HB3) after the first half-bridge block (HBi) are unidirectional conducting elements.

5. The converting arrangement (10) according to claim 4, wherein the upper semiconducting element (SC1U) of the first half-bridge block (HBi) and the semiconducting elements (SC2L, SC2U) of each half-bridge block (HB2) after the first half-bridge block are diodes.

6. The converting arrangement (10) according to any of claim 1-4, wherein the upper semiconducting element (SC1U) of the first half-bridge block (HBi) and the semiconducting elements (SC2L, SC2U; SC2L, SC2U, SC3L, SC3U) of each half-bridge block (HB2; HB2, HB3) after the first half-bridge block are switches.

7. The converting arrangement (10) according to claim 6, wherein each lower semiconducting element (SC2L; SCW2L, SC3L) of each half-bridge block (HB2; HB2, HB3) after the first half-bridge block (HB1) is on when the first switch (SW1) is on and each upper semiconducting element (SC1U, SC2U; SC1U, SC2U, SC3U) of each half-bridge block (HB1, HB2; HB1, HB2, HB3) is on when the first switch (SWi) is off.

8. The converting arrangement (10) according to claims 6 or 7, wherein the switches are operated to control the phase-shift between the voltages of the coupled inductors (L1, L2; L1, L2, L3).

9. The converting arrangement according to any previous claim, further comprising a control unit (14) configured to control the operation of the switches of the converter.

10. The converting arrangement (10) according to any previous claim, further comprising a fuel cell (FC) connected to the first and second connection terminals (T1, T2).

11. The converting arrangement (10) according to any previous claim, further comprising an energy storage (ES) connected between the third and fourth connection terminals (T3, T4).

12. A method of controlling a converter (12A; 12B; 12C) for converting between a first voltage (Vi) and a second voltage (V2), the converter comprising:
a first and a second connection terminal (T1, T2) between which the first voltage (Vi) is to appear,
a third and a fourth connection terminal (T3, T4) between which the second voltage (V2) is to appear,
a string of cascaded half-bridge blocks comprising a first half-bridge block (HBi) and a second half-bridge block (HB2), each half-bridge block (HB1, HB2; HB1, HB2, HB3) comprising a capacitor (C1, C2; C1, C2, C3) in parallel with a semiconductor branch comprising an upper and a lower semiconducting element (SC1U, SC1L, SC2U, SC2L; SC1U, SC1L, SC2U, SC2L, SC3U, SC3L),
a group of inductors (L1, L2; L1, L2, L3), each inductor being connected to a junction between the upper and lower semiconducting elements of a corresponding half-bridge block,
where the first connection terminal (T1) is provided at a junction between the lower semiconducting element (SC1L) and the capacitor (C1) of the first half-bridge block (HBi), the second connection terminal (T2) is connected to pr a first inductor (Li) of the group associated with the first half-bridge block (HBi), the third connection terminal (T3) is connected to the first connection terminal (T1) and the fourth connection terminal (T4) is provided at a junction between the capacitor (C2; C3) and the upper semiconducting element (SC2U; SC3U) of the last half-bridge block (HB2; HB3) in the string, the lower semiconducting element (SC1L) of the first half-bridge block (HBi) is a first switch (SWi) and each inductor (L2; L2; L3) of each half-bridge block (HB2; HB2, HB3) after the first half-bridge block (HB1) is connected to a corresponding floating capacitor (CF1; CF1, CF2) and
inductively coupled to the first inductor (Li) with a turns ratio so that a voltage of the first inductor (L1), adjusted with the turns ratio, is applied to said each inductor (L2; L2; L3) of each half-bridge block (HB2; HB2, HB3) after the first half-bridge block (HBi),
the method comprising:
applying (18) the first voltage (V1) across the first inductor (L1) based on a first switch position of the first switch (SW1) for charging the first inductor (L1), charging (20), for each half-bridge block (HB2; HB2, HB3) after the first half-bridge block (HB1) in the string, the connected floating capacitor (CF1; CF1, CF2) using the voltage across the corresponding inductor (L2; L2, L3) and the voltage across the capacitor (C1; C1, C2) of each half-bridge block (HB1, HB1, HB2) preceding the half-bridge block (HB2, HB3) in question,
applying (22) a combination of the first voltage (Vi) and the voltage of the first inductor (Li) across the capacitor (C1) of the first half-bridge block (HBi) based on a second switch position of the first switch (SWi) for charging the capacitor (C1) of the first half-bridge block (HBi) to the combination of the first voltage and the voltage of the first inductor (Li), and
applying (24), for each half-bridge block (HB2; HB2, HB3) after the first half-bridge block (HBi) in the string, a combination of the voltages of the corresponding floating capacitor (CF1; CF2) and inductor (L2, L3) across a circuit comprising the capacitor (C2; C3) of the respective half-bridge block (HB2, HB3) connected in series with the capacitors (C1; C1, C2) of preceding half-bridge blocks in the string for charging the capacitors of the circuit and obtaining the second voltage (V2) as the sum of the voltages of the capacitors (C1, C2, C3) of the half-bridge blocks (HB1, HB2, HB3).

13. The method according to claim 12, wherein the upper semiconducting element (SC1U) of the first half-bridge block (HB1) and the semiconducting elements (SC2L, SC2U; SC2L, SC2U, SC3K, SC3U) of each half-bridge block (HB2; HB2, HB3) after the first half-bridge block (HBi) are diodes, the charging (20) is based also on the first switch position of the first switch (SWi), and the applying (24) of the combination of voltages of the floating capacitors (CF1, CF2) and inductors (L2, L3) across the circuit comprising series-connected capacitors (C2, C3) of half-bridge blocks (HB2, HB3) is based also on the second switch position of the first switch (SWi).

14. The method according to claim 12, wherein the upper semiconducting element (SC1U) of the first half-bridge block (HBi) and the semiconducting elements (SC2L, SC2U; SC2L, SC2U, SC3L, SC3U) of each half-bridge block (HB2; HB2, HB3) after the first half-bridge block are switches, the charging (20) is based on a first switch position of the lower semiconducting element of the respective half-bridge block (HB2, HB3), the applying (22) of the first voltage (Vi) and the voltage of the first inductor (Li) across the capacitor (C1) of the first half-bridge block (HBi) is based also on a first switch position of the upper semiconducting element (SC1U) of the first half-bridge block (HBi) and the applying (24), for each half-bridge block (HB2; HB2, HB3) after the first half-bridge block (HBi), the combination of voltages of the corresponding floating capacitor (CF1, CF2) and inductor (L2, L3) across a circuit comprising the series-connected capacitors (C1, C2, C3) of the respective half-bridge block (HB2, HB3) and preceding half-bridge blocks is based on a first switch position of the upper semiconducting element (SC2U) of the respective half-bridge block (HB2, HB3).

15. The method according to claim 14, further comprising controlling a phase shift between the voltages across the coupled inductors.
